# EUROPEAN PATENT SPECIFICATION

(11) **EP 1 734 632 B1**
(45) Date of publication and mention of the grant of the patent: **19.12.2018**
(21) Application number: 06425296.8
(22) Date of filing: 03.05.2006
(51) Int. Cl.: H02H 1/06, H02H 3/04, H02H 3/33, H02H 11/00, H01H 83/02, H01H 71/00

(54) **Safety device for a circuit breaker**
Sicherheitsvorrichtung für einen Leitungsschutzschalter
Dispositif de sécurité pour un disjoncteur de protection

(30) Priority: 17.05.2005 IT MI20050899
(43) Date of publication of application: 20.12.2006
(73) Proprietor: BTICINO S.P.A., Viale Borri, 231 21100 Varese (IT)
(72) Inventor: Fabrizi, Fabrizio, 24122 Bergamo (IT); Re, Marcello, 21040 Venegono Superiore (Varese) (IT); Purgato, Flavio, 21039 Valganna (Varese) (IT)
(74) Representative: Mozzi, Matteo

(56) References cited:
- EP-A1- 0 637 866
- EP-A2- 0 589 347
- DE-A1- 19 601 878
- GB-A- 2 072 441
- US-A- 4 831 483
- US-A- 5 708 551
- US-A- 6 094 329

## Description

The present invention relates to safety devices for electrical installation circuits.

Safety devices against failures or anomalies that may affect proper operation are known to be provided in modern electrical installations either for household or industrial purposes. In fact, lacking these safety devices, anomalies and failures can damage the user equipment connected to the installation, and danger conditions can be generated for those using this equipment.

An exemplary safety device for electrical installations is the magneto-thermic circuit-breaker or automatic circuit-breaker. This magneto-thermic circuit breaker is known to be configured such as to act on suitable electrical contacts in order to automatically disconnect the whole installation or a part thereof, i.e. the user equipment (or loads), from the network power line (or line) when short-circuit and overload events occur.

The ground fault circuit interrupter is another example of a known safety device. This circuit-breaker operates to automatically disconnect the electrical installation from the network power line either in case of ground failure (leakage) or following phase-ground faults.

Furthermore, safety devices are available on the market, which integrate both magneto-thermic circuit breaker and ground fault circuit interrupter. These devices ensure a simultaneous protection against installation failures due to short-circuit/overload and leakage.

It should be observed that, particularly in household installations, said safety devices can be accessed and acted upon by users, who are often unskilled.

When one of the above-mentioned failure events occurs, with the consequent disconnection of the installation from the power line, the unskilled user will attempt to restore the interrupted connection between the installation and the line by manually acting on the safety device without first seeking the possible cause of the failure. Particularly, the user acts on a suitable lever of the device to restore or "reset" the safety device in order to (re-)close the connection between the electrical installation and the power line.

When the installation failure is temporary (e.g. due to an ill-timed tripping of the ground fault interrupter), the safety device is reset following the action by the user and the electrical installation is powered again.

On the other hand, when the failure is permanent (e.g. due to a short-circuit or a ground insulation failure), the action by the user leads to another failure condition, and the installation is disconnected again from the line due to the action of the safety device.

It should be observed that, with permanent failures, an attempt of restoring the safety device can make the installation quite unsafe both for the electrical conduits and people.

Safety devices relevant to the present application are known from EP-A-0637866, DE-A-19601878, US-A-6094329, US-A-5708551, EP-A-0589347, GB-A-2072441 and US--A-4831483.

The object of the present invention is to provide a safety device for an electrical installation that is improved over traditional devices.

This object is achieved by a safety device such as described in the annexed claim 1. Alternative embodiments of the safety device of the invention are described in the dependent claims.

The characteristics and advantages of the present invention will appear from the detailed description below of an exemplary and non-limiting embodiment thereof, in relation with the annexed drawings, in which:
Fig. 1 is a schematic illustration of a safety device in accordance with the invention;
Fig. 2 is a block diagram of a control device included in the safety device from Fig. 1.

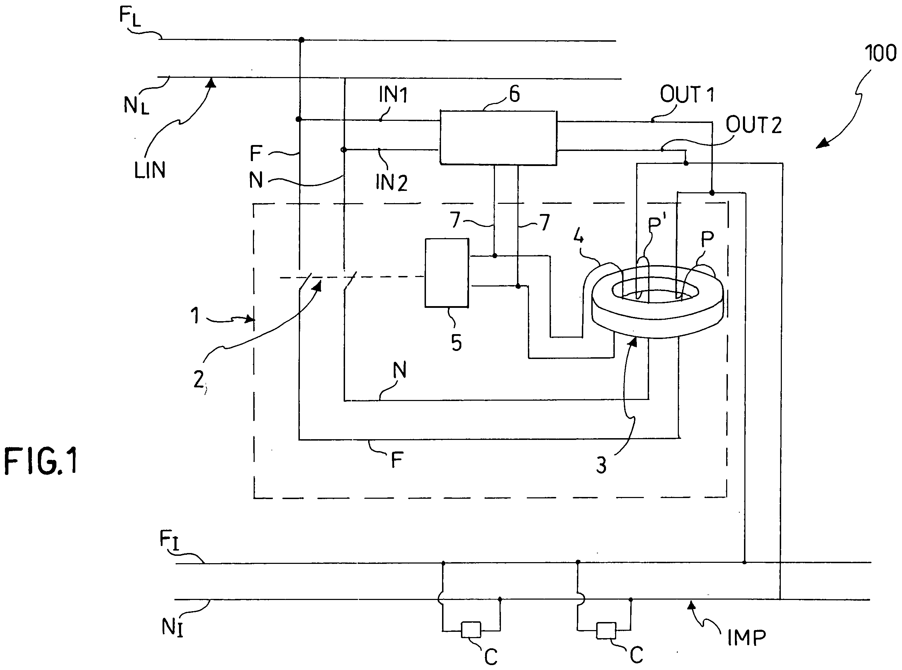

With reference to Fig. 1, an exemplary safety device 100 for an electrical installation is described in accordance with the invention.

Particularly, this safety device 100 can be used to connect a network power line LIN to an electrical installation circuit IMP to be protected. This installation IMP can be either a household or industrial installation comprising a plurality of user equipment or loads C that have to be powered by the network power line LIN. Therefore, the electrical installation IMP is conventionally called the "load".

Furthermore, the inventive safety device 100 can be adapted in order to be connected either to a single-phase network power line or a three-phase line. Particularly, with reference to Fig. 1, the power line LIN is a single-phase line comprising two electrical conductors or wires, i.e. a first phase electrical wire F_{L} and a first neutral electrical wire N_{L}.

The installation IMP from Fig. 1 is also single-phase and comprises a second phase electrical wire F_{I} and a second neutral electrical wire N_{I}. Said phase wires F_{L}, F_{I} are connected to each other by means of a further phase electrical wire F and the neutral wires N_{L}, N_{I} are connected to each other by means of a further neutral electrical wire N.

As shown in Fig. 1, these further phase F and neutral N wires provide the electrical connection between the network power line LIN and the installation IMP through the safety device 100 which is thus bipolar.

Furthermore, the safety device 100 of the invention comprises a ground fault circuit interrupter 1 that is shown in Fig. within the dotted square.

As known to those skilled in the art, this ground fault circuit interrupter 1 comprises means for interrupting the electrical connection between the network line LIN and the installation IMP. These interruption means are embodied by electrical contacts 2, for example, power contacts provided at the phase F and neutral N wires.

These electrical contacts 2 can be automatically opened and manually closed to disconnect/connect the installation IMP from/to the network power line LIN. Particularly, the contacts 2 can be manually re-closed by acting on a suitable lever (not shown in Fig. 1) of the safety device 100.

Furthermore, the ground fault circuit interrupter 1 comprises a toroidal core 3 made of ferromagnetic material with high permeability. Particularly, the phase F and neutral N electrical wires of the device 100 are wound on this core 3 in order to form a first primary winding P and a second primary winding P', respectively.

It should be observed that, in normal operating conditions, i.e. when the installation IMP is connected to the line LIN, the toroidal core 3 is run by equal and opposite magnetic fluxes, i.e. the resulting flux is equal to zero. In fact, these fluxes are generated by currents travelling within the windings, i.e. the phase F and neutral N electrical wires, that have the same intensity but opposite directions.

Furthermore, a secondary winding 4 being provided on the toroidal core 3 can be connected to means 5 for automatically releasing the contacts 2 of the ground fault circuit interrupter 1.

For example, these release means 5 comprise a polarized relay to be activated through the secondary winding 4 after a non-zero magnetic flux is generated within the toroidal core 3. As is known to those skilled in the art, this non-zero flux is generated by a difference in the current intensity within the phase F and neutral N wires that is caused by a failure occurring in the installation IMP.

When a failure occurs in the installation IMP, the polarized relay 5 acts to command the automatic opening of the electrical contacts 2 by disconnecting the installation IMP from the power line LIN.

In addition, the safety device 100 of the invention comprises control means 6 for measurements to be carried out on the installation IMP following the occurrence of a failure in the installation.

Particularly, these control means comprise an electronic control device 6 having input electrical terminals IN1 e IN2 connected to the network power line LIN and output electrical terminals OUT1 and OUT2 connected to the installation IMP.

As shown in Fig. 1, at the network line LIN, the control device 6 is connected to the phase F and neutral N wires by means of a first IN1 and second IN2 input terminals, respectively.

On the other hand, at the installation IMP, the control device 6 is connected to the phase F and neutral N wires by means of a first OUT1 and a second OUT2 output terminals, respectively.

Furthermore, the control device 6 is connected to the release relay 5 by means of electrical lines for actuating signals 7. Through these lines 7, the control device 6 can activate/not activate the release relay 5 based on the results of the measurements carried out on the installation IMP.

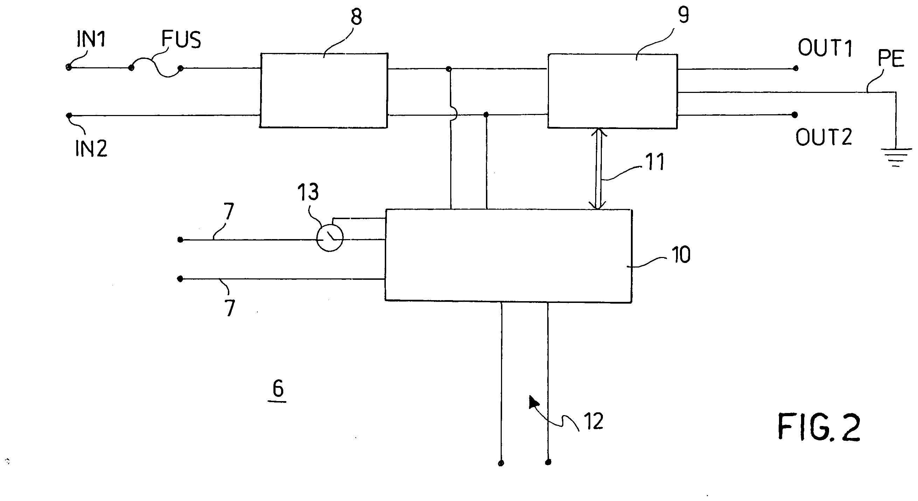

With reference to Fig. 2, an example of the control device 6 is described, which is included in the safety device 100 of the invention.

Particularly, this control device 6 comprises a power supply device 8 being connected to the network power line LIN by means of the input electrical terminals IN1 and IN2.

It should be observed that, at the first electrical input terminal IN1, the control device 6 includes a safety fuse FUS against current peaks.

Furthermore, the power supply device 8 comprises a safety transformer and a suitable rectifier circuit in order to provide, starting from the network alternating current, a direct voltage to electronic blocks 9 and 10 of the control device 6.

In greater detail, the control device 6 comprises an electronic check block 9 that is connected to an output of the power supply device 8. This check block 9 is connected to the installation IMP by means of the first OUT1 and second OUT2 output electrical terminals and comprises a ground safety circuit PE, i.e. a terminal to be connected to the ground potential. Furthermore, the check block 9 operates to carry out the measurements on the installation IMP following the opening of the contacts 2 caused by a failure occurring in the installation IMP.

Furthermore, a further electronic central block or central unit 10 of the control device 6 is connected to the output of the power supply device 8. This central unit 10 is, for example, an integrated microcontroller suitable to exchange information 11 with the electronic check block 9 in order to manage the measurement operations that are carried out on the installation IMP.

It should be observed that the central unit 10 is connected to the release relay 5 by means of the actuating signal 7 lines. As shown in Fig. 2, one of these lines 7 can be enabled by closing a switch 13 (e.g. a triac).

Finally, the central unit 10 of the control device 6 comprises a user interface that is provided with a communication (for example, serial) port 12, for remotely monitoring the condition of the installation IMP and the exchange of information concerning the measurements that have been carried out.

An exemplary operation of the inventive safety device 100 is described below.

In normal operating conditions, the installation IMP is connected to the network power line LIN via the safety device 100 having the electrical contacts 2 in the closed position. In this case, the control device 6 detects a voltage on the electrical phase F and neutral W wires both at the line LIN and installation IMP.

In greater detail, the central unit 10 of the control device 6 detects the presence of these voltages via the power supply device 8 and the check block 9, respectively. In this case, the control device sets in the rest condition.

When the contacts 2 of the safety device 100 are opened (for example, after a manual opening due to an action on the lever of the device 100 or an automatic opening caused by a failure occurring in the installation IMP), the central unit 10 of the control device 6 does not detect the voltage on the phase F and neutral N wires at the installation any longer.

Consequently, the control device 6 is automatically activated in order to check the condition of the installation IMP. Particularly, this check provides that measurements are carried out on electrical parameters of the installation IMP via the check block 9.

For example, a first direct current measurement is carried out to evaluate the impedance between the phase F and neutral N wires at the installation IMP, i.e. the direct current impedance between the second phase F_{I} and second neutral N_{I} wires.

Subsequently, a second measurement is carried out at a suitable frequency, via the check block 9, again, in order to evaluate the impedance between the phase F_{I} and neutral N_{I} wires and the ground potential PE.

Furthermore, a suitable voltage is applied between the phase F_{I} and neutral N_{I} wires and the ground potential PE in order to measure a leakage current of the installation IMP.

The results of said measurements, i.e. the data concerning said electrical parameters, are compared with reference values that are stored in a memory (not shown in Fig. 2) of the control device 6.

When the measurement results give values that are consistent with those stored in the control device 6, this means that the failure occurred in the installation has been transitory. Consequently, a user can restore the connection between the line LIN and the installation IMP by resetting the safety device, i.e. re-closing the electrical contacts 2 in a manual manner.

On the contrary, when the measurements carried out by the check block 9 give out of standard values, a permanent failure is consequently present in the installation IMP.

At this stage, the control device 6 signals the presence of this permanent failure by means of suitable light LEDs that are provided on an outer envelope of the safety device 100.

In addition, the central unit 10 of the control device 6 provides to send actuating signals on lines 7 to the release relay 5.

Consequently, however, when a user desires to reset the safety device 100 by manually closing the electrical contacts 2, despite the light signal indicates that a failure is present, the latter will immediately return to the opening position after said relay 5 has been activated.

Advantageously, the internal control device 6 of the safety device 100 prevents the installation IMP from being reconnected to the network power line LIN after a permanent failure has occurred in the installation. The generation of dangerous short-circuit currents or ground failure is thus avoided.

Furthermore, the safety device 100 of the invention also provides a sound signal, in addition to the light signal, in order to warn the user that a permanent failure is present in the installation IMP. It should be observed that the sound signal can be silenced either by acting on a push-button that is provided on the envelope of the device 100 or by remedying the failure condition.

Advantageously, in the latter case, the sound signal can be used to locate the failure in the installation IMP. For example, the user can act on the installation IMP by disconnecting the plugs of the user loads C until the cause of the failure has been identified by the sound signal turning off.

Furthermore, the control device 6 can store the failure signals (both light and sound) such that, upon a temporary absence of the network voltage, the failure can be however signalled once this voltage has been restored.

Advantageously, the control device 6 can include a maximum voltage release function. In other words, the check block 9 of the control device 6 carries out a measurement of the electrical voltage supplied by the network line LIN. When the voltage measured is too high, the central unit 10 sends actuating signals to the relay 5 in order to release the electrical contacts 2 of the safety device 100.

This function of the control device 6 is particularly useful when the device 100 is used to protect installations comprising single-phase users that are connected to a three-phase network line. In fact, in this case, overcurrent damaging events are more frequent.

Furthermore, the power supply device 8 comprising a safety transformer ensures that the network power line LIN and the installation IMP are completely isolated when the electrical contacts 2 result to be opened.

Advantageously, the ground fault circuit interrupter 1 and the control device 6 forming the safety device 100 of the invention are enclosed within a same isolated envelope.

Finally, it is utile to observed that while a safety device 100 for electrical installations comprising a control device 6 being associated with a ground fault circuit interrupter 1, the advantages of the invention can be also applied to a safety device that is provided by a magneto-thermic circuit-breaker being assembled with a ground fault circuit interrupter, i.e. a differential magneto-thermic safety device. Even in this case, the control device 6 is associated with the ground fault circuit interrupter.

Obviously, to the safety device of the present invention, those skilled in the art, aiming at satisfying contingent and specific requirements, will be able to carry out further modifications and variations, which are all contemplated within the scope of protection of the invention, as defined in the claims below.

## Claims

1. A safety device (100) for an electrical installation (IMP), said device comprising:
- electrical contacts (2) suitable to be automatically opened and manually closed in order to disconnect/connect the installation from/to a network power line (LIN);
- automatic release means (5) that can be actuated in consequence of a failure condition detection in the installation in order to command the automatic opening of said contacts and disconnect the installation from the power line;
- control means (6) for performing measurements on the installation by discriminating the nature of the failure condition, said control means being able to act on the release means in order to hold the device contacts opened and prevent the same from being manually re-closed upon a failure condition of a permanent type, said control means comprising a control electronic device (6) that can be electrically connected to the electrical installation (IMP) and the power line (LIN) and such as to generate actuating signals for the release means (5),
said control electronic device (6) further comprises:
- an electronic check block (9) to carry out measurements of electrical parameters of said installation (IMP);
- an electronic central block (10) to compare data corresponding to said electrical parameters with reference values and generate the actuating signals of the release means (5) based on the results of this comparison,
when the measurements carried out by the check block (9) give out of standard values, a permanent failure is present in the electrical installation (IMP) and the control device (6) signals the presence of this permanent failure by means of a light signal activating a suitable light LEDs that are provided on an outer envelope of the safety device (100),
**characterised in that** the safety device (100), in addition to the light signal, provides a sound signal in order to warn the user that a permanent failure is present in the electrical installation (IMP), the sound signal can be silenced either by acting on a push-button that is provided on the envelope of the safety device (100) or by remedying the failure condition, whereby in the latter case the sound signal can be used to locate a failure in the electrical installation (IMP) by disconnecting the plugs of user loads (C) until the cause of the failure has been identified by the sound signal turning off.

2. The safety device (100) according to claim 1, wherein the control electronic device (6) comprises input terminals (IN1, IN2) to be connected to the network power line (LIN) and output terminals (OUT1, OUT2) to be connected to the electrical installation (IMP).

3. The safety device (100) according to claim 2, wherein said control electronic device (6) includes a power supply device (8) provided with a safety transformer in order to isolate the electric installation (IMP) from the network power line (NW).

4. The safety device (100) according to claims 1 and 3, wherein the power supply device (8) further includes a rectifier circuit in order to provide the electronic check block (9) and electronic central block (10) with direct electric voltage.

5. The safety device (100) according to claim 1, wherein said installation (IMP) is provided with at least one phase electrical conductor (F_{I}), and one neutral conductor (N_{I}) and said check block (9) is such as to carry out a direct current measurement of the impedance between phase conductor and neutral conductor.

6. The safety device (100) according to claim 5, wherein the electronic control device (6) is provided with a ground safety circuit (PE) and the check block (9) is connected to the ground safety circuit (PE) such that an alternating current measurement of the impedance between the phase (F_{I}) and neutral (N_{I}) conductors and the ground safety circuit (PE) can be carried out.

7. The safety device (100) according to claim 6, wherein the check block (9) is such that a measurement of the leakage current of the electrical installation (IMP) is carried out by applying a suitable voltage between the phase (F_{I}) and neutral (N_{I}) conductors and the ground circuit (PE).

8. The device (100) according to claim 1, wherein the check block (9) is capable of carrying out a measurement of the electric voltage being provided by the network power line (LIN) and the electronic central block (10) is capable of generating the actuating signals when the measured voltage exceeds a maximum reference value.

9. The safety device (100) according to claim 1, wherein the check block (9) is such that said measurements of the electric parameters are carried out after the lack of electrical voltage has been detected, which is applied by the network line (LIN) to the installation (IMP) after the electrical contacts (2) have been opened.

10. The safety device (100) according to claim 1, wherein said electronic control device (6) is provided on a printed circuit board and the electronic central block (10) is an integrated micro-controller.

11. The safety device (100) according to claims 1 and 5, further comprising a ferromagnetic core (3) that is provided with first (P) and second (P') windings, which are formed by a further phase conductor (F) being connected to said phase conductor (F_{I}) and a further neutral conductor (N) being connected to said neutral conductor (N_{I}), respectively, said further phase and neutral conductors being run, upon failure condition, by currents such that a non-zero magnetic flux is generated within said core.

12. The safety device (100) according to claim 11, wherein said core further comprises a further winding (4) that can be connected to the automatic release means (5), which can be activated to open the electrical contacts (2) of the device after the non-zero magnetic flux has been generated within the core (3).

13. The safety device (100) according to claim 1, wherein said automatic release means (5) comprise a polarized relay.

14. The safety device (100) according to claim 1, wherein said device comprises a ground fault circuit interrupter (1), said ground fault circuit interrupter and the electronic control device (6) being enclosed within a same isolated enveloped.

15. The safety device (100) according to claim 1, wherein said device comprises a differential magneto-thermic circuit interrupter.

16. The safety device (100) according to claim 1, wherein said electronic central block (10) comprises a user interface that is provided with a (preferably serial) communication port (12) for the electrical installation (IMP) to be remotely monitored and in order to exchange information concerning the measurements carried out on electrical parameters.

## Patentansprüche

1. Sicherheitsvorrichtung (100) für eine elektrische Installation (IMP), wobei die Vorrichtung umfasst:
- elektrische Kontakte (2), welche dazu geeignet sind, automatisch geöffnet und händisch geschlossen zu werden, um die Installation von/mit einer Netzwerk-Stromleitung (LIN) zu trennen/verbinden;
- automatische Lösemittel (5), welche als Reaktion auf eine Fehlerzustand-Bestimmung in der Installation betätigt werden können, um das automatische Öffnen der Kontakte und Trennen der Installation von der Stromleitung zu befehlen;
- Regel-/Steuermittel (6) zum Durchführen von Messungen an der Installation durch Unterscheiden der Natur des Fehlerzustands, wobei die Regel-/Steuermittel in der Lage sind, auf die Lösemittel einzuwirken, um die Vorrichtungskontakte geöffnet zu halten und dieselben daran zu hindern, händisch, auf einen Fehler-Zustand eines permanenten Typs hin, wieder geschlossen zu werden, wobei die Regel-/Steuermittel eine elektronische Regel-/Steuervorrichtung (6) umfassen, welche mit der elektrischen Installation (IMP) und der Stromleitung (LIN) elektrisch verbunden werden können, und um so Betätigungssignale für die Lösemittel (5) zu erzeugen,
wobei die elektronische Regel-/Steuervorrichtung (6) ferner umfasst:
- einen elektronischen Überprüfungsblock (9), um Messungen von elektrischen Parametern der Installation (IMP) auszuführen;
- einen elektronischen Zentralblock (10), um Daten entsprechend den elektrischen Parametern mit Referenzwerten zu vergleichen und die Betätigungssignale der Lösemittel (5) auf Grundlage der Ergebnisse dieses Vergleichs zu erzeugen,
wobei, wenn die Messungen, welche durch den Überprüfungsblock (9) ausgeführt werden, Standardwerte ausgeben, ein permanenter Fehler in der elektrischen Installation (IMP) vorhanden ist und die Regel-/Steuervorrichtung (6) die Anwesenheit dieses permanenten Fehlers mittels eines Lichtsignals signalisiert, welches ein geeignetes Licht mit LEDs aktiviert, welche an einem äußeren Gehäuse der Sicherheitsvorrichtung (100) bereitgestellt sind,
**dadurch gekennzeichnet, dass** die Sicherheitsvorrichtung (100), zusätzlich zu dem Lichtsignal, ein Tonsignal bereitstellt, um den Benutzer zu warnen, dass ein permanenter Fehler in der elektrischen Installation (IMP) vorhanden ist, wobei das Tonsignal entweder durch Einwirken auf einen Druckknopf, welcher an dem Gehäuse der Sicherheitsvorrichtung (100) bereitgestellt ist, oder durch Beheben des Fehlerzustands ausgeschaltet werden kann, wodurch in dem letzteren Fall das Tonsignal verwendet werden kann, um einen Fehler in der elektrischen Installation (IMP) durch Trennen der Stecker von Benutzerlasten (C) zu lokalisieren, bis der Grund des Fehlers dadurch identifiziert worden ist, dass das Tonsignal ausgeschaltet wird.

2. Sicherheitsvorrichtung (100) nach Anspruch 1, wobei die elektronische Regel-/Steuervorrichtung (6) Eingangsanschlüsse (IN1, IN2), welche mit der Netzwerk-Stromleitung (LIN) zu verbinden sind, und Ausgangsanschlüsse (OUT1, OUT2) umfasst, welche mit der elektrischen Installation (IMP) zu verbinden sind.

3. Sicherheitsvorrichtung (100) nach Anspruch 2, wobei die elektronische Regel-/Steuervorrichtung (6) eine Stromversorgungsvorrichtung (8) umfasst, welche mit einem Sicherheits-Transformator versehen ist, um die elektrische Installation (IMP) von der Netzwerk-Stromleitung (NW) zu isolieren.

4. Sicherheitsvorrichtung (100) nach Ansprüchen 1 und 3, wobei die Stromversorgungsvorrichtung (8) ferner eine Rektifizierungs-Schaltung umfasst, um elektrische Gleichspannung an den elektronischen Überprüfungsblock (9) und den elektronischen Zentralblock (10) bereitzustellen.

5. Sicherheitsvorrichtung (100) nach Anspruch 1, wobei die Installation (IMP) mit wenigstens einer elektrischen Phasenleiterbahnen (F_{I}) und einer neutralen Leiterbahn (N_{I}) bereitgestellt ist und der Überprüfungsblock (9) derart ist, um eine direkte Strommessung der Impedanz zwischen der Phasenleiterbahn und der neutralen Leiterbahn auszuführen.

6. Sicherheitsvorrichtung (100) nach Anspruch 5, wobei die elektronische Regel-/Steuervorrichtung (6) mit einer Erdungs-Sicherheitsschaltung (PE) versehen ist und der Überprüfungsblock (9) mit der Erdungs-Sicherheitsschaltung (PE) derart verbunden ist, dass eine Wechselstrommessung der Impedanz zwischen der Phasen- (F_{I}) und der neutralen (N_{I}) Leiterbahn und der Erdungs-Sicherheitsschaltung (PE) ausgeführt werden kann.

7. Sicherheitsvorrichtung (100) nach Anspruch 6, wobei der Überprüfungsblock (9) derart ist, dass eine Messung des Leckagestroms der elektrischen Installation (IMP) durch Applizieren einer geeigneten Spannung zwischen der Phasen- (F_{I}) und der neutralen (N_{I}) Leiterbahn und der Erdungs-Schaltung (PE) ausgeführt wird.

8. Vorrichtung (100) nach Anspruch 1, wobei der Überprüfungsblock (9) in der Lage ist, eine Messung der elektrischen Spannung, welche durch die Netzwerk-Stromleitung (LIN) bereitgestellt wird, auszuführen, und der elektronische Zentralblock (10) in der Lage ist, die Betätigungssignale zu erzeugen, wenn die gemessene Spannung einen maximalen Referenzwert überschreitet.

9. Sicherheitsvorrichtung (100) nach Anspruch 1, wobei der Überprüfungsblock (9) derart ist, dass die Messungen der elektrischen Parameter ausgeführt werden, nachdem der Mangel an elektrischer Spannung erfasst worden ist, welche durch die Netzwerk-Leitung (LIN) an die Installation (IMP) angelegt wird, nachdem die elektrischen Kontakte (2) geöffnet worden sind.

10. Sicherheitsvorrichtung (100) nach Anspruch 1, wobei die elektronische Regel-/Steuervorrichtung (6) an einer Platine vorgesehen ist und der elektronische Zentralblock (10) ein integrierter Mikrocontroller ist.

11. Sicherheitsvorrichtung (100) nach Ansprüchen 1 und 5, ferner umfassend einen ferromagnetischen Kern (3), welcher mit ersten (P) und zweiten (P') Wicklungen versehen ist, welche durch eine weitere Phasen-Leiterbahn (F), welche mit der Phasen-Leiterbahn (F_{I}) verbunden ist, bzw. eine weitere neutrale Leiterbahn (N) gebildet sind, welche mit der neutralen Leiterbahn (N_{I}) verbunden ist, wobei die weitere Phasen- und neutrale Leiterbahn, auf einen Fehlerzustand hin, von Strömen durchlaufen werden, so dass innerhalb des Kerns ein magnetischer Fluss von nicht null erzeugt wird.

12. Sicherheitsvorrichtung (100) nach Anspruch 11, wobei der Kern ferner eine weitere Wicklung (4) umfasst, welche mit den automatischen Lösemitteln (5) verbunden werden kann, welche aktiviert werden können, um die elektrischen Kontakte (2) der Vorrichtung zu öffnen, nachdem der magnetische Fluss von nicht null innerhalb des Kerns (3) erzeugt worden ist.

13. Sicherheitsvorrichtung (100) nach Anspruch 1, wobei die automatischen Lösemittel (5) ein polarisiertes Relais umfassen.

14. Sicherheitsvorrichtung (100) nach Anspruch 1, wobei die Vorrichtung eine Erdungs-Fehler-Schaltungs-Unterbrechungseinheit (1) umfasst, wobei die Erdungs-Fehler-Schaltungs-Unterbrechungseinheit und die elektronische Regel-/Steuervorrichtung (6) innerhalb eines gleichen isolierten Gehäuses eingefasst sind.

15. Sicherheitsvorrichtung (100) nach Anspruch 1, wobei die Vorrichtung eine differenzielle magneto-thermische Schaltungs-Unterbrechungseinheit umfasst.

16. Sicherheitsvorrichtung (100) nach Anspruch 1, wobei der elektronische Zentralblock (10) eine Benutzerschnittstelle umfasst, welche mit einem (vorzugsweise seriellen) Kommunikationsanschluss (12) für die elektrische Installation (IMP) versehen ist, um aus der Ferne überwacht zu werden, und um Informationen betreffend die Messungen auszutauschen, welche bezüglich elektrischer Parameter ausgeführt werden.

## Revendications

1. Dispositif de sécurité (100) pour une installation électrique (IMP), le dispositif comprenant :
- des contacts électriques (2) adaptés pour être ouverts automatiquement et fermés manuellement afin de couper l'installation de / la connecter à une ligne d'un réseau électrique (LIN) ;
- des moyens de déclenchement automatique (5) qui peuvent être actionnés à la suite d'une détection d'une condition de défaut dans l'installation, afin de commander l'ouverture automatique des contacts et de couper l'installation de la ligne électrique ;
- des moyens de commande (6) pour effectuer des mesures dans l'installation en distinguant la nature de la condition de défaut, les moyens de commande étant adaptés pour agir sur les moyens de déclenchement afin de maintenir ouverts les contacts du dispositif et de les empêcher d'être refermés manuellement, à la suite d'une condition de défaut de type permanent, les moyens de commande comprenant un dispositif électronique de commande (6) qui peut être connecté électriquement à l'installation électrique (IMP) et la ligne du réseau électrique (LIN) et cela de façon à engendrer des signaux d'actionnement pour les moyens de déclenchement (5),
le dispositif électronique de commande (6) comprenant en outre :
- un bloc électronique de vérification (9) pour effectuer des mesures de paramètres électriques de l'installation (IMP) ;
- un bloc central électronique (10) pour comparer des données correspondant aux paramètres électriques avec des valeurs de référence et engendrer les signaux d'actionnement des moyens de déclenchement (5) sur la base des résultats de cette comparaison,
lorsque les mesures effectuées par le bloc de vérification (9) donnent des valeurs hors standard, il existe un défaut permanent dans l'installation électrique (IMP) et le dispositif de commande (6) signale l'existence de ce défaut permanent à l'aide d'un signal lumineux activant des DEL de lumière appropriée qui sont disposées sur une enveloppe extérieure du dispositif de sécurité (100),
**caractérisé en ce que** le dispositif de sécurité (100) fournit, en plus du signal lumineux, un signal phonique afin de prévenir l'utilisateur qu'un défaut permanent existe dans l'installation électrique (IMP), le signal phonique pouvant être arrêté soit en actionnant un bouton poussoir qui est disposé sur l'enveloppe du dispositif de sécurité (100) soit en réparant la condition de défaut, dans ce dernier cas, le signal phonique pouvant être utilisé pour localiser un défaut dans l'installation électrique (IMP) en déconnectant les fiches électriques de charges d'utilisateur (C) jusqu'à ce que le défaut ait été identifié par l'arrêt du signal phonique.

2. Dispositif de sécurité (100) selon la revendication 1, **caractérisé en ce que** le dispositif électronique de commande (6) comprend des borniers d'entrée (IN1, IN2) destinés à être connectés à la ligne du réseau électrique (LIN) et des borniers de sortie (OUT1, OUT2) destinés à être connectés à l'installation électrique (IMP).

3. Dispositif de sécurité (100) selon la revendication 2, **caractérisé en ce que** le dispositif électronique de commande (6) comprend un dispositif d'alimentation électrique (8) pourvu d'un transformateur de sécurité afin de séparer l'installation électrique (IMP) de la ligne du réseau électrique (NW).

4. Dispositif de sécurité (100) selon les revendications 1 et 3, **caractérisé en ce que** le dispositif d'alimentation électrique (8) comprend en outre un circuit redresseur afin d'alimenter le bloc électronique de vérification (9) et le bloc central électronique (10) en tension électrique continue.

5. Dispositif de sécurité (100) selon la revendication 1, **caractérisé en ce que** l'installation (IMP) est pourvue d'au moins un conducteur électrique de phase (F_{I}) et d'un conducteur neutre (N_{I}) et **en ce que** le bloc de vérification (9) est configuré pour effectuer des mesures de courant continu de l'impédance entre le conducteur de phase et le conducteur neutre.

6. Dispositif de sécurité (100) selon la revendication 5, **caractérisé en ce que** le dispositif électronique de commande (6) est pourvu d'un circuit de sécurité de masse (PE) et que le bloc de vérification (9) est relié au circuit de sécurité de masse (PE) de façon qu'une mesure à courant alternatif de l'impédance entre les conducteurs de phase (F_{I}) et neutre (N_{I}) et le circuit de sécurité de masse (PE) puisse être effectuée.

7. Dispositif de sécurité (100) selon la revendication 6, **caractérisé en ce que** le bloc de vérification (9) est configuré de façon qu'une mesure du courant de fuite de l'installation électrique (IMP) soit effectuée en appliquant une tension appropriée entre les conducteurs de phase (F_{I}) et neutre (N_{I}) et le circuit de masse (PE).

8. Dispositif de sécurité (100) selon la revendication 1, **caractérisé en ce que** le bloc de vérification (9) est adapté pour effectuer une mesure de la tension électrique fournie par la ligne du réseau électrique (LIN) et **en ce que** le bloc central électronique (10) est adapté pour engendrer les signaux d'actionnement lorsque la tension mesurée dépasse une valeur de référence maximale.

9. Dispositif de sécurité (100) selon la revendication 1, **caractérisé en ce que** le bloc de vérification (9) est configuré de façon que les mesures des paramètres électriques soient effectuées après la détection de l'absence de tension électrique, qui est fournie par la ligne du réseau (LIN) à l'installation (IMP), après l'ouverture des contacts électriques (2).

10. Dispositif de sécurité (100) selon la revendication 1, **caractérisé en ce que** le dispositif électronique de commande (6) est mis à disposition sur une carte de circuit imprimé et **en ce que** le bloc central électronique (10) est un microcontrôleur intégré.

11. Dispositif de sécurité (100) selon les revendications 1 et 5, comprenant en outre un noyau ferromagnétique (3) qui est pourvu d'un premier (P) et d'un deuxième (P') bobinages qui sont formés respectivement par un autre conducteur de phase (F) relié au connecteur de phase (F_{I}) et un autre conducteur neutre (N) relié au conducteur neutre (N_{I}), lesdits autres conducteurs de phase et neutre étant parcourus, en condition de défaut, par des courants tels qu'un flux magnétique non zéro soit engendré dans le noyau.

12. Dispositif de sécurité (100) selon la revendication 11, **caractérisé en ce que** le noyau comprend en outre un autre bobinage (4) qui peut être relié aux moyens de déclenchement automatique (5) lesquels peuvent être activés pour ouvrir les contacts électriques (2) du dispositif après que le flux magnétique non zéro ait été engendré dans le noyau (3).

13. Dispositif de sécurité (100) selon la revendication 1, **caractérisé en ce que** les moyens de déclenchement automatique (5) comprennent un relais polarisé.

14. Dispositif de sécurité (100) selon la revendication 1, **caractérisé en ce que** le dispositif comprend un disjoncteur de fuite à la terre (1), le disjoncteur de fuite à la terre et le dispositif électronique de commande (6) étant enfermés dans une même enveloppe isolée.

15. Dispositif de sécurité (100) selon la revendication 1, **caractérisé en ce que** le dispositif comprend un disjoncteur différentiel magnétothermique.

16. Dispositif de sécurité (100) selon la revendication 1, **caractérisé en ce que** le bloc central électronique (10) comprend une interface utilisateur qui est pourvue d'un port de communication (de préférence sériel) (12) pour une surveillance à distance de l'installation électrique (IMP) et pour échanger des informations relatives aux mesures effectuées concernant des paramètres électriques.
